# EUROPÄISCHE PATENTSCHRIFT

(11) **EP 1 517 122 B1**
(45) Veröffentlichungstag und Bekanntmachung des Hinweises auf die Patenterteilung: **19.10.2016**
(21) Anmeldenummer: 04104127.8
(22) Anmeldetag: 27.08.2004
(51) Int. Cl.: G01D 13/22, B60K 35/00, B60K 37/02, G01D 7/06, G01D 11/28, G01D 13/26

(54) **Anzeigevorrichtung zur Anzeige von Informationen, insbesondere für Fahrzeuge**
Display apparatus for displaying information, especially for vehicles
Dispositif d'affichage numérique pour l'affichage d'informations, notamment pour véhicules

(30) Priorität: 19.09.2003 DE 10343484
(43) Veröffentlichungstag der Anmeldung: 23.03.2005
(73) Patentinhaber: ROBERT BOSCH GMBH, 70442 Stuttgart (DE)
(72) Erfinder: Schach, Harald, 71287, Flacht (DE); Herzog, Bernhard, 70619, Stuttgart (DE); Ernst, Waldemar, 71665, Vaihingen/Enz (DE)

(56) Entgegenhaltungen:
- DE-A1- 4 313 530
- DE-A1- 19 529 390
- DE-A1- 19 751 649
- DE-A1- 19 849 973
- DE-A1- 19 940 155

## Beschreibung

Die Erfindung betrifft eine Anzeigevorrichtung nach dem Oberbegriff des Anspruchs 1.

### Stand der Technik:

Anzeigevorrichtungen zur Anzeige von Informationen, insbesondere für Fahrzeuge gibt es mit mechanischen Zeigern und mit Zeigern auf der Basis von Lichtstrahlen.

Die technische Lehre aus der EP 0 785 416 B1 beschreibt ein "Für ein KFZ bestimmtes Zeigerinstrument". Darin sind ein mechanischer Zeiger für die Anzeige eines Istwertes und eine lichtstrahlförmige Anzeige für die Darstellung eines einstellbaren Sollwertes beschrieben. Nachteilig ist, dass durch den Lichtzeiger nur ein einziger, variabel einstellbarer Wert darstellbar ist, der eine Bewertung des aktuellen Istwertes in Bezug auf den eingestellten Sollwert ermöglicht. Weitere Informationen können nicht dargestellt werden.

Ein weiterer Stand der Technik geht aus der DE 195 29 390 hervor, der in einem Kombinationsinstrument die Teilung eines Laserstrahles mittels eines Strahlteilers zur voneinander unabhängigen Darstellung der Teilstrahlen auf einer Skala mit darin angeordnetem LC-Bildschirm vorschlägt. In dieser Darstellung können mittels des geteilten Lichtstrahls wiederum nur zwei Werte unabhängig voneinander dargestellt werden.

Die DE 43 13 530 Beschreibt eine Anzeigevorrichtung zum Anzeigen veränderlicher Größen. Bei dieser technischen Lehre wird ein Laserstrahl für die Anzeige eines variablen Wertes beschrieben, der mittels einer Auslassöffnung in einem Schirmgehäuse in den Sichtbereich der Anzeigeeinheit eingespeist wird. Gezeigt und beschrieben wird die Darstellung eines einzigen Wertes in der Anzeige. Für die Darstellung mehrerer Werte wird eine koaxiale Anordnung ineinander angeordneter Systeme für die Erzeugung eines Laserstrahles vorgeschlagen. Dies erfordert aber einen mehrfachen Aufbau von strahlerzeugenden Einheiten, die zusätzlich ungünstig auch noch koaxial ineinander angeordnet sein sollen.

Aus der DE 198 49 493 A1 ist eine Anzeigevorrichtung bekannt, die eine Laserstrahl-Erzeugungseinrichtung zum Erzeugen eines Laserstrahls aufinreist. Ferner ist eine Laserstrahl-Ablenkeinrichtung vorgesehen, um ein reelles Bild durch die Ablenkung des Laserstrahls zu erzeugen. Insbesondere können hiermit Rundinstrumente, wie zum Beispiel Tachometer oder Drehzahlmesser nachgebildet werden.

### Aufgabe und Vorteile der Erfindung

Aufgabe der vorliegenden Erfindung ist es daher, eine Anzeigevorrichtung für die Anzeige von Informationen, insbesondere für ein Fahrzeug, zur Verfügung zu stellen, die mit einem Lichtstrahl möglichst viele, voneinander unabhängige Informationen gleichzeitig darstellen kann.

Gelöst wird die Aufgabe durch die technische Lehre des Anspruchs 1.

Aus den Unteransprüchen gehen vorteilhafte Weiterbildungen und zusätzliche Merkmale der Erfindung hervor.

Die vorliegende Erfindung beschreibt eine Anzeigevorrichtung zur Anzeige von Informationen, insbesondere für ein Fahrzeug, mit einer Anzeigefläche, welche zur Darstellung der Informationen mit einem Lichtstrahl beleuchtbar ist, wobei bewegliche Ablenkmittel, mit welchen der Gang des Lichtstrahles geändert werden kann, vorhanden sind, wobei erfindungswesentlich ist, dass die Ablenkmittel für die Darstellung einer momentanen Information auf einem Abschnitt der Anzeigefläche den Lichtstrahl über den Abschnitt mehrfach bewegen.

Dadurch wird es möglich, mittels eines entsprechend abgelenkten Lichtstrahles mindestens eine, vorzugsweise aber beliebig viele Informationen an einer vorgegebenen Stelle auf der Anzeigefläche der Anzeigevorrichtung mit einem einzigen Lichtstrahl darzustellen. Die Information durch den geführten Lichtstrahl erfolgt dabei durch die mehrfache Bewegung des Lichtstrahles über den maßgeblichen Teil der Anzeigefläche. Z.B. setzt sich eine Information aus mehreren Schnittflächen des Lichtstrahls mit einer Anzeigefläche bzw. Sichtbarmachungsfläche zusammen, die in zeitlicher Abfolge zur Erzeugung der Information mehrfach überstrichen werden.

In einer bevorzugten Ausführungsform ist es vorgesehen, dass Sichtbarmachungsmittel im Bereich der Anzeigefläche zur Sichtbarmachung der Informationen vorgesehen sind, und dass die Geschwindigkeit der Bewegung der Ablenkmittel in Zusammenwirkung mit den Sichtbarmachungsmittel derart ist, dass ein Betrachter nicht wahrnimmt, dass sich die Information auf dem Abschnitt der Anzeigefläche aus einem sich bewegenden Lichtstrahl zusammensetzt.

Zunächst kann als Sichtbarmachungsmittel ein Streukörper, wie beispielsweise ein durchscheinendes oder durchsichtiges Material mit aufgerauter Oberfläche, oder ein grundsätzlich lichtstreuende Eigenschaften aufweisendes Material, eingesetzt werden, wodurch der Lichtstrahl z.B. mindestens in der Frequenz von Bildern eines Films über die Streufläche geführt werden muss, damit die Information optisch stabil steht. Sofern die Sichtbarmachungsmittel optisch "aktiv" sind, z.B. Nachleuchtzeiteigenschaften besitzen, kann die Lichtstrahlgeschwindigkeit herabgesetzt werden.

In einer demgegenüber weiterentwickelten Ausführungsform ist es vorgesehen, dass ein Steuerungsmittel für eine intermittierende Abbildung des Lichtstrahles vorhanden ist. Durch die intermittierende Abbildung des Lichtstrahles auf der Anzeigefläche der Anzeigevorrichtung ist es möglich, den Lichtstrahl periodisch über die gesamte Anzeigefläche abzulenken und dennoch eine oder mehrere Informationen an verschiedenen Stellen auf der Anzeigefläche darstellen zu können, indem der Lichtstrahl zwischendurch ausgeblendet wird.

So kann z.B. ein bestimmter Wert einer Anzeige dargestellt werden und zusätzlich könnte ein Bereich der Anzeige ausgeleuchtet werden, um beispielsweise einen kritischen Bereich eines Betriebszustandes anzuzeigen, beispielsweise der Drehzahlbereich des Motors, in welchem dieser vorzugsweise nicht betrieben werden soll.

Des Weiteren ist es möglich, beispielsweise in einem Geschwindigkeitsanzeiger eine Höchstgeschwindigkeit zu markieren. So können beispielsweise bekannte Zone mit 30 km/h oder 50 km/h punktförmig oder flächig ausgeleuchtet werden, und zusätzlich wäre es möglich, den Wert der aktuell gefahrenen Geschwindigkeit darzustellen. Durch die intermittierende Darstellung des Lichtstrahles kann jede definierte Information einzeln, für den Betrachter aber gleichzeitig sichtbar, angezeigt werden.

In einer weiteren Ausführungsform kann es vorgesehen sein, dass die Ablenkmittel eine Drehvorrichtung für eine rotierende Führung des Lichtstrahls umfassen. In einer demgegenüber abgewandelten Ausführungsform kann es vorgesehen sein, dass die Ablenkmittel eine Kippvorrichtung mit einer Kippachse für die Führung des Lichtstrahls aufweisen, und in einer weiteren Ausführungsform kann es vorgesehen sein, dass eine Lichtquelle für die Erzeugung des Lichtstrahls beweglich angeordnet ist.

In einer darüber hinaus vorteilhaften Ausführungsform kann es vorgesehen sein, dass eine Synchronisationseinheit zur Führung des Lichtstrahls vorhanden ist. Dadurch kann gewährleistet werden, dass der Lichtstrahl immer von einer definierten Position ausgehend über die Anzeigefläche der Anzeigevorrichtung gelenkt wird und so eine Kontrolle des geführten Lichtstrahls gegeben ist.

In einer ebenfalls vorteilhaften Ausführungsform umfasst die Synchronisationseinheit einen Sensor, vorzugsweise einen Fotosensor. Mit einem Fotosensor kann vergleichsweise einfach eine Lichtstrahlerkennung zur Erfassung der Position des Lichtstrahls vorgenommen werden.

In einer außerdem günstigen Ausführungsform kann es vorgesehen sein, dass Nachleuchtmittel für eine nachleuchtende Darstellung des Lichtstrahls vorhanden sind. Dadurch wird es möglich, die vom Lichtstrahl angeleuchteten Bereiche der Anzeigefläche länger hell erscheinen zu lassen. Dadurch ist es für den Betrachter noch leichter möglich, die angezeigten Informationen gut ablesen zu können.

In einer weiteren bevorzugten Ausführungsform ist es vorgesehen, dass die Sichtbarmachungsmittel für die Wiedergabe des Lichtstrahllichtes für verschiedene Anzeigenbereiche in verschiedenen Farbgebungen ausgestaltet sind.

Beispielsweise könnte so für einen Drehzahlmesser die Anzeige entsprechend des Drehzahlbereiches in drei Farbbereiche unterteilt werden. Ein erster Bereich, in welchem der Motor betrieben werden soll, kann beispielsweise als weiß oder grün oder in einer beliebigen anderen Farbe dargestellt werden.

Der nächste Bereich, welcher zwischen dem normalen Drehzahlbereich und dem kritischen Drehzahlbereich liegt, könnte beispielsweise mit der Farbe gelb dargestellt werden, und der kritische Bereich, in welchem der Motor nicht betrieben werden soll, könnte beispielsweise in der Farbe rot dargestellt werden, wobei die Anzeigefläche selbst eine davon unabhängige Farbgebung aufweisen kann.

Eine ähnliche Aufteilung eines Anzeigebereiches könnte beispielsweise für eine Tankanzeige oder auch für die Geschwindigkeitsanzeige vorgesehen sein.

In einer überdies vorteilhaften Ausführungsform ist es vorgesehen, dass die Sichtbarmachungsmittel segmentiert sind. Als Segmentierung kann ganz allgemein die Ausbildung von Bereichen verstanden werden, welche Abschnittsweise transluzent und nicht transluzent ausgebildet sind. D.h. in den transluzenten Bereichen kann der Lichtstrahl sichtbar gemacht werden und in den nicht transluzenten Bereichen wird die Sichtbarmachung des Lichtstrahls verhindert bzw. unterdrückt.

Dadurch ergibt sich der Vorteil, dass eine sehr genaue Auflösung in der Darstellung des Lichtstrahles erreicht werden kann. Beispielsweise könnte eine Geschwindigkeitsanzeige mit einer segmentierten Unterteilung von 1 km/h vorgesehen sein. Ebenso könnte es vorgesehen sein, dass die Anzeige eines Drehzahlinstrumentes soweit segmentiert ist, dass sie eine noch sinnvolle Unterteilung der Umdrehungen pro Minute auflösen kann.

In einer außerdem vorteilhaften Ausführungsform ist es vorgesehen, dass die Ablenk- und Steuerungsmittel so ausgebildet sind, dass auf der Anzeigefläche ein oder mehrere punktförmige und/oder ein oder mehrere band- oder strichförmige beleuchtete Markierungen auf der Anzeigefläche gegebenenfalls gleichzeitig darstellbar sind. Die band- oder strichförmigen Markierungen erstrecken sich über einen größeren Bereich als zumindest einen Punkt.

Beispielsweise lassen sich auf einem Kreislinienabschnitt Bereiche punkt- und/oder strichförmig beleuchten. Es ist auch denkbar, dass eine band- und/oder strichförmige Markierung in einer vorgegebenen Helligkeit dargestellt wird und in dieser Markierung zusätzlich ein oder mehrere Punkte dargestellt werden können, die deutlich heller oder dunkler als der Rest der Markierung erscheinen.

Die band- oder strichförmigen Markierungen können kreisförmig verlaufen, sie können jedoch auch radial oder bogenförmig verlaufend ausgebildet sein.

Grundsätzlich ist es auch möglich, abhängig von der Strahlführung beliebige Bereiche an der Anzeigefläche sichtbar zu machen, so dass alle möglichen geometrischen Formen realisierbar sind.

In einer erfindungsgemäßen Ausführungsform ist es vorgesehen, dass die Ablenkmittel zur Achse eines mechanischen Zeigers und/oder zur Achse einer Skala eines mechanischen Zeigers in exzentrischer Positionierung angeordnet sind. Dadurch wird es möglich, zusätzlich zu einem mechanischen Zeiger eine Anzeige durch den geführten Lichtstrahl zu realisieren. Somit ergeben sich weitere Kombinationsmöglichkeiten in der Anzeige von Informationen.

Um Nichtlinearitäten ausgleichen zu können, ist es in einer demgegenüber verbesserten Ausführungsform vorgesehen, dass eine Korrektureinheit für die Behebung einer Nichtlinearität in der Auslenkung des Lichtstrahls vorhanden ist. Dadurch kann eine durch eine exzentrische Positionierung hervorgerufene Nichtlinearität z. B. eine nichtlineare Winkelzuordnung in der Anzeige behoben werden.

### Zeichnungen:

In den beigefügten Zeichnungen werden Ausführungsbeispiele unter Bezugnahme auf die einzelnen Figuren näher beschrieben. Es zeigen:
- Figur 1: eine schematische Schnittdarstellung einer Anzeigevorrichtung zur Anzeige von Informationen, insbesondere für ein Fahrzeug;
- Figur 2: eine schematische Draufsicht auf eine Anzeigevorrichtung;
- Figur 3: eine schematische Schnittdarstellung durch eine Anzeigevorrichtung in einer weiteren Ausführungsform;
- Figur 4: einen Ausschnitt auf eine schematische Draufsicht auf eine Anzeigevorrichtung nach der Figur 3;
- Figur 5: eine weitere schematische Schnittdarstellung auf eine Ausführungsform einer Anzeigevorrichtung;
- Figur 6: wiederum einen Teilausschnitt einer schematischen Draufsicht aus der Ausführungsform der Figur 5;
- Figur 7: einen beispielhaften Ausschnitt einer schematischen Draufsicht aus einer weiteren Ausführungsform;
- Figur 8: einen Ausschnitt auf eine weitere schematische Draufsicht in einer anderen Ausführungsform; und
- Figur 9: eine schematische Schnittdarstellung einer gegenüber der Ausführungsform 1 abgewandelten Ausführung.

### Beschreibung des Ausführungsbeispiels:

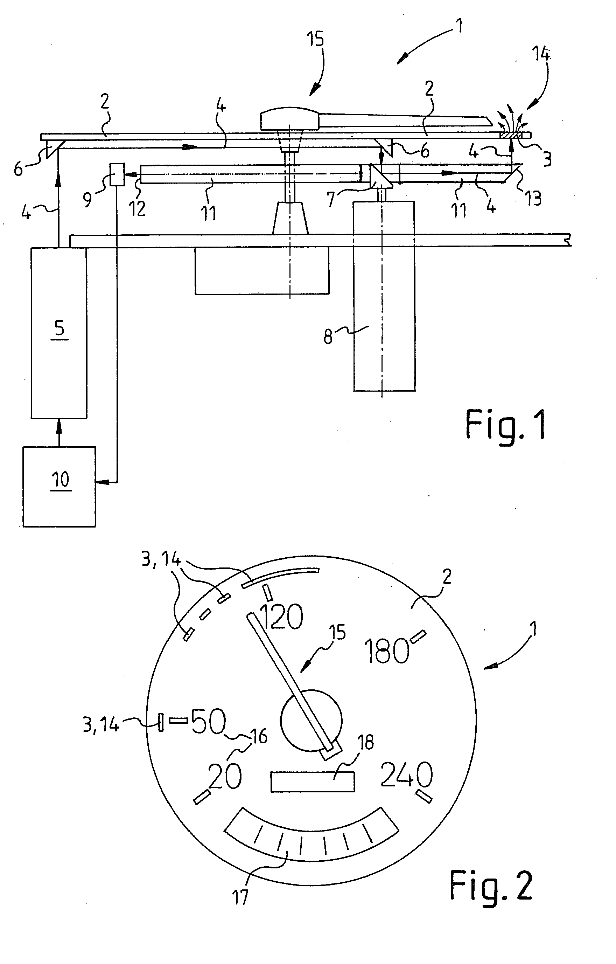

Figur 1 zeigt eine Anzeigevorrichtung 1 in schematischer Schnittdarstellung. An der Unterseite der Anzeigefläche 2 sind Ablenkmittel 6 angeordnet, die den von der Lichtquelle 5 erzeugten Lichtstrahl 4 auf ein bewegliches Ablenkmittel 7 lenken. Dieses bewegliche Ablenkmittel 7 wird mittels eines Antriebs 8 um eine Achse gedreht, so dass das bewegliche Ablenkmittel 7 rotieren kann.

In einer bestimmten Winkelstellung des Antriebs 8 lenkt das beweglich Ablenkmittel 7 den Lichtstrahl 4 gegen die schräge Stirnseite 13, so dass der Lichtstrahl 4 gegen die Unterseite der Anzeigefläche 2 abgelenkt wird. An dieser Stelle befindet sich ein Sichtbarmachungsmittel in der Form eines Streukörpers 3, der den darauf gelenkten Lichtstrahl zerstreut, so dass dieser an der Vorderseite der Anzeigefläche besser erkennbar ist.

Für die Verteilung des Lichtstrahls 4 hinter der Anzeigefläche 2 kann beispielsweise ein Lichtleiter 11 verwendet werden, der als Scheibe ausgebildet ist. Dadurch kann beispielsweise ein Teilkreis unterhalb der Anzeigefläche 2 überstrichen werden, welcher durch den umgelenkten Lichtstrahl 4 beleuchtet werden kann. Durch eine intermittierende Lichtführung können somit auf diesem Teilkreis verschiedene Bereiche beleuchtet bzw. unbeleuchtet dargestellt werden. Dementsprechend können verschiedene Informationen durch die Anzeigevorrichtung dargestellt werden.

Um zu gewährleisten, dass der Lichtstrahl immer die richtige Position aufweist ist ein Sensor 9 vorgesehen, der mit einer Kontroll- und Steuereinheit 10 verbunden ist. Jedes Mal wenn der Lichtstrahl auf den Sensor 9 gelenkt wird sendet dieser ein Signal an die Kontroll- und Steuereinheit 10. Somit kann diese Synchronisationseinheit feststellen ob die Position des beweglichen Ablenkmittels 7 mit seiner theoretischen Position noch übereinstimmt.

Über eine entsprechende Steuerleitung kann die Lichtquelle 5 so angesteuert werden, dass sie beispielsweise einen intermittierenden Lichtstrahl für die Darstellung beliebig vieler, gegebenenfalls voneinander unabhängiger Informationen erzeugt.

In der Darstellung in der Figur 1 ist für die Ablenkung des Lichtstrahls 4 eine senkrechte Stirnseite 12 für die Ausleitung des Lichtstrahls aus dem scheibenförmigen Lichtleiter 11 gezeigt, so dass der Lichtstrahl den Sensor 9 trifft. Diese senkrechte Ausführungsform der Stirnseite in dem Bereich, in welchem der Sensor 9 angeordnet ist, ist jedoch nicht zwingend erforderlich. Der Lichtleiter 9 kann selbstverständlich auch, wie im übrigen Bereich eine Schräge 13 aufweisen. Dementsprechend wäre dann die Anordnung des Sensors 9 zu gestalten, so dass die Synchronisation des Lichtstrahls wiederum gewährleistet ist.

Die Kontroll- und Steuereinheit 10 kann beispielsweise aus einem Mikrokontroller bestehen, der sowohl das Eingangssignal des Sensors erfasst als auch die Steuerung der Lichtquelle 5 übernehmen kann.

In dieser Ausführungsform ist es vorgesehen, den Lichtstrahl hinter bzw. unter der Anzeigefläche der Anzeigevorrichtung zu führen.

In der Darstellung der Figur 2 ist die Anzeigevorrichtung in schematischer Draufsicht gezeigt. Dabei ist in der Anzeigefläche 2 eine grobe Skalierung in der Form einer Anzeige 16 mit einem schematischen, nur teilweise dargestellten Anzeigebereich von 20 bis 240 dargestellt. Zusätzlich sind noch zwei weitere Anzeigen 17 und 18 gezeigt, die beispielsweise einen Benzinstand, einen Kilometerstand, eine Verbrauchsanzeige oder dergleichen darstellen können. Im weiteren ist auch der Streukörper 3 bzw. der dadurch dargestellte gestreute Lichtstrahl 4 als Streulicht 14 abschnittsweise im Wertebereich 50 und etwa 90 bis 130 zum Teil in durchgehender und zum Teil in unterbrochener Darstellung gezeigt.

In einer besonderen Ausführungsform ist es nun möglich, sowohl Informationen durch die Beleuchtung des kreisförmig in der Anzeigefläche 2 angeordneten Streukörpers 3 mit wahlweise durchgehender oder unterbrochener Ausleuchtung anzuzeigen, als auch weitere, zusätzliche Informationen darzustellen, wozu wenigstens teilweise Bereiche weiterer Anzeigen, wie zum Beispiel der Anzeigen 17 und 18, entsprechend beleuchtet werden.

Dadurch kann eine multifunktionale Anzeigevorrichtung zur Anzeige von Informationen verwirklicht werden.

Für die Ablenkung des Lichtstrahls 4 kann dazu beispielsweise eine Kippvorrichtung mit einer Kippachse für die Führung des Lichtstrahls ausgebildet sein. Dadurch ist es möglich, den Lichtstrahl sowohl im Kreis zu führen, wobei der Radius des durch den Lichtstrahl 4 beschriebenen Kreises, bezogen auf eine zentrale Achse, gleichbleibend ist, als auch in bestimmten Bereichen der Anzeigefläche den Radius des durch das bewegliche Ablenkmittel geführten Lichtstrahls, bezogen auf die gleiche zentrale Achse, variabel zu gestalten. Dadurch kann beispielsweise ein Bereich der Anzeigefläche beleuchtet werden, welcher innerhalb oder außerhalb eines ansonsten etwa kreisförmigen Anzeigebereichs in der Anzeigefläche 2 der Anzeigevorrichtung 1 liegt.

Dabei kann in einer besonderen Ausführungsform auch ein Farbwechsel in der Anzeige des Streulichtes 14 vorgesehen sein, so dass zum Beispiel zusätzlich zu einer aktuellen Geschwindigkeitsanzeige ein vorgegebener Mindestgeschwindigkeitswert oder Höchstgeschwindigkeitswert wahlweise in einer anderen Farbgebung in der Anzeige 16 dargestellt wird.

Zusätzlich ist es dann auch noch möglich in einer der beiden übrigen Anzeigen 17 oder 18 gegebenenfalls auch wiederum in einer anderen farblichen Darstellung eine Information anzuzeigen, wie beispielsweise den aktuellen Benzinverbrauch, beispielsweise durch die Einfärbungen grün, gelb oder rot.

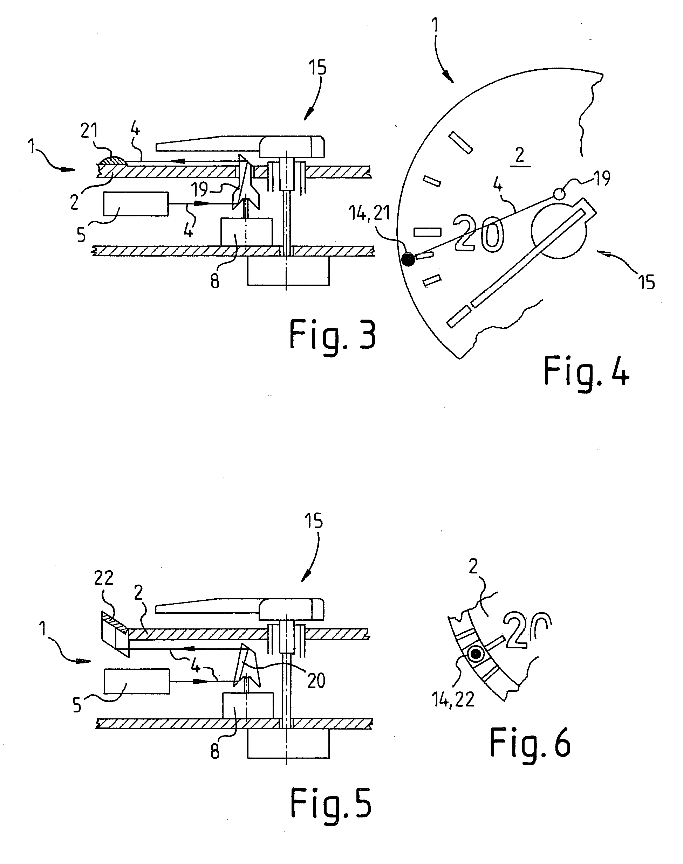

Die Figur 3 zeigt eine schematische Schnittdarstellung in einer gegenüber der in den Figuren 1 und 2 abgewandelten Ausführungsform. Hierbei wird der von der Lichtquelle 5 erzeugte Lichtstrahl 4 über ein Ablenkmittel 19 durch die Anzeigefläche 2 hindurch auf die dem Betrachter zugewandte Seite der Anzeigevorrichtung 1 gelenkt. Das Ablenkmittel 19 ist hier in der Art eines durchleuchtbaren Pfeils gezeigt, wobei der Lichtstrahl 4 an der entsprechenden Reflexionsfläche so umgelenkt wird, dass er zuerst unterhalb bzw. vom Betrachter aus gesehen hinter der Anzeigefläche 2 geführt ist, und beispielsweise im umgebenden Bereich der Achse einer mechanischen Zeigereinheit 15 die Anzeigefläche 2 durchbricht, und durch eine entsprechende Abschrägung am Ablenkmittel 19 den Lichtstrahl 4 auf einen Streukörper 21 umlenkt.

Der Streukörper 21 kann in diesem Fall ebenfalls in etwa eine kreisförmige Ausprägung auf der Anzeigefläche 2 aufweisen.

Selbstverständlich ist die etwa kreisförmige Ausbildung in der Anzeige nur beispielhaft angegeben. Die Anzeige kann selbstverständlich auch in anderen geometrischen Formen wie zum Beispiel rechteckig oder mehreckig ausgebildet sein. Dementsprechend wird in einem solchen Ausführungsbeispiel die Korrektureinheit die Führung des Lichtstrahles 4 passend korrigieren.

In dieser Ausführungsform nach Figur 3 ist, entgegen der ersten Ausführungsform, die Führung des Lichtstrahls 4 auf der dem Betrachter zugewandten Seite der Anzeigefläche 2 realisiert.

In der Figur 4 ist eine schematische Draufsicht auf einen Ausschnitt einer Anzeigefläche 2 einer Anzeigevorrichtung 1 gezeigt. Neben dem Ablenkmittel 19 ist auch die Draufsicht auf die mechanische Zeigereinheit 15 dargestellt. Der Lichtstrahl 4 wird durch das Ablenkmittel 19 durch die Anzeigefläche 2 hindurchgeführt und an der dem Betrachter zugewandten Seite umgelenkt und gegen den Streukörper 21 geführt. Hierbei ist eine etwa punktförmige oder ellipsenförmige Darstellung des Lichtstrahles 4 als Streulicht 14 auf dem Streukörper 21 gezeigt.

Die Darstellung des Lichtstrahls 4 auf dem etwa kreisförmig abgebildeten Streukörper 21 kann selbstverständlich auch in dieser Ausführungsform wahlweise punktförmig an einer bestimmten Stelle oder auch über einen längeren Winkelbereich hin als Bogen dargestellt werden.

Die Darstellung in der Figur 5 ist eine gegenüber der Ausführungsform in der Figur 3 wiederum abgewandelte Ausführungsform. Hierbei die Führung des Lichtstrahls 4 wiederum, bezogen auf den Betrachter, hinter der Anzeigefläche 2 geführt. Auch hier ist eine etwa pfeilförmige, durchleuchtbare Ausführungsform eines Ablenkmittels 20 gezeigt, welches ebenfalls mit einem Antrieb 8 ausgestattet ist um im Kreis geführt werden zu können. Der reflektierte, aus dem pfeilförmigen Ablenkmittel 20 austretende Lichtstrahl 4 tritt auf der Rückseite in die Anzeigefläche 2 ein, und wird an einer abgeschrägten Stelle zur Betrachter zugewandten Seite der Anzeigefläche abgelenkt. An dieser befindet sich ein Streukörper 22, der den Lichtstrahl wiederum zerstreut, so dass der Betrachter diesen besser erkennen kann.

In der Figur 6 ist nun die Draufsicht auf diesen speziellen Ausschnitt in der Anzeigefläche 2 dargestellt. Dabei ist das Streulicht 14 auf dem Streukörper 22 dunkel hinterlegt dargestellt. Dadurch soll angezeigt werden, dass die Information beispielsweise 20 km/h aktuell beleuchtet wird.

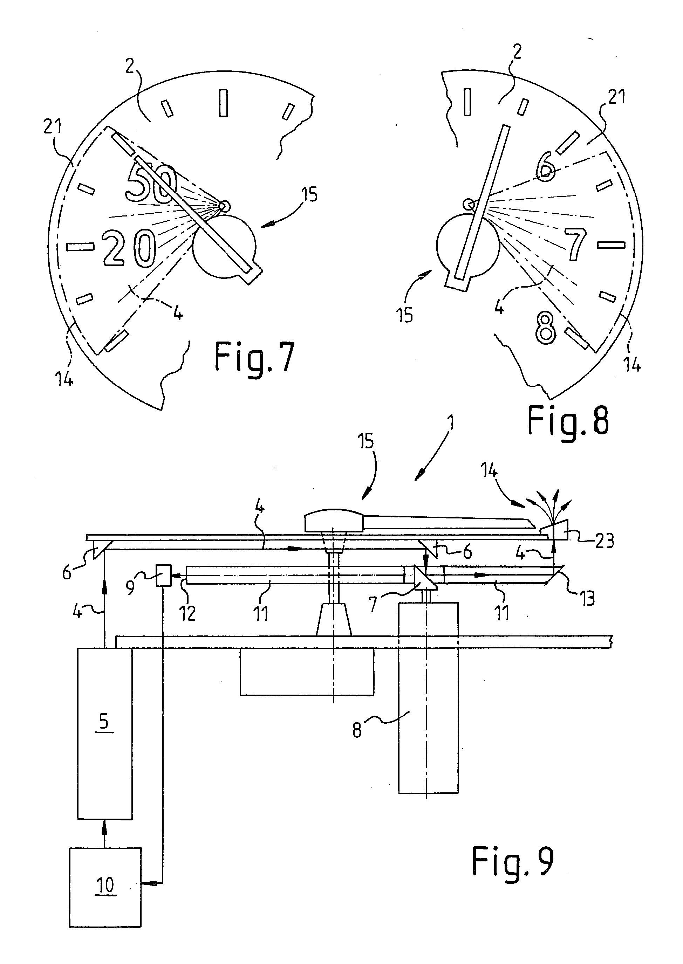

In der Figur 7 ist nun wiederum eine weitere Ausführungsform gezeigt, bei der auch die Beleuchtung des Bereichs der Anzeige vorgesehen ist, welche zwischen dem aus dem Ablenkmittel 19 austretenden Lichtstrahl und dem die Anzeigefläche 2 begrenzenden Streukörper 21 liegt. Somit wird nicht nur der Streukörper 21 beleuchtet, wie bisher beschrieben, sondern auch der Bereich der Anzeigefläche 2, welcher von dem Lichtstrahl 4 überstrichen wird. In der Darstellung der Figur 7 ist dazu beispielhaft eine Geschwindigkeitsanzeige schematisiert dargestellt, und in der Darstellung der Figur 8 ist eine dazu eine Drehzahlanzeige schematisiert dargestellt.

Die beschriebenen Ausführungsformen sind beispielhaft dargestellt und können selbstverständlich durch weitere Abwandlungen ergänzt werden, die weitere, vorteilhafte Ausführungsformen ergeben.

In der Darstellung des Lichtstrahls auf der Anzeigefläche kann es auch vorgesehen sein, dass der Lichtstrahl als wandernder Zeiger entsprechend einer Bewegung eines mechanischen Zeiger realisiert wird. Dies wäre beispielsweise ein Teil aus der Ausführungsform in den Figuren 7 und 8. Dazu können sowohl einzelne, speziell segmentierte Bereiche auf der Anzeigefläche in der Form eines Zeigers dargestellt werden, als auch zusätzlich weitere Bereiche durch eine segmentförmige Beleuchtung sichtbar gemacht werden. Auch hierzu ist es möglich Farbkombinationen in der Darstellung durch den Lichtstrahl zu realisieren.

Im Weiteren ist es möglich eine Lichtquelle zu verwenden die außerhalb des sichtbaren Wellenlängenbereichs liegt. In einem solchen Fall wird zur Sichtbarmachung dieses Lichtstrahls ein Konvertermaterial in der Anzeigefläche angebracht.

## Patentansprüche

1. Anzeigevorrichtung (1) zur Anzeige von Informationen, insbesondere für ein Fahrzeug, mit einem mechanischen Zeiger (15) und einer Anzeigefläche (2), welche zur Darstellung der Informationen mit einem Lichtstrahl (4) beleuchtbar ist, wobei bewegliche Ablenkmittel (7, 19), mit welchen der Gang des Lichtstrahles (4) geändert werden kann, vorhanden sind, und wobei die Ablenkmittel (7, 19) derart ausgelegt sind, dass sie für die Darstellung einer momentanen Information auf einem Abschnitt der Anzeigefläche (2) den Lichtstrahl (4) über den Abschnitt mehrfach bewegen, **dadurch gekennzeichnet, dass** die Ablenkmittel (7, 19) zur Achse des mechanischen Zeigers (15) und/oder zur Achse einer Skala des mechanischen Zeigers (15) in exzentrischer Positionierung angeordnet sind.

2. Anzeigevorrichtung nach Anspruch 1, **dadurch gekennzeichnet, dass** Sichtbarmachungsmittel (21, 22) im Bereich der Anzeigefläche (2) zur Sichtbarmachung der Informationen vorgesehen sind, und dass die Geschwindigkeit der Bewegung der Ablenkmittel in Zusammenwirkung mit den Sichtbarmachungsmittel (21, 22) derart ist, dass ein Betrachter nicht wahrnimmt, dass sich die Information auf dem Abschnitt der Anzeigefläche aus einem sich bewegenden Lichtstrahl zusammensetzt.

3. Anzeigevorrichtung nach einem der Ansprüche 1 oder 2, **dadurch gekennzeichnet, dass** ein Steuerungsmittel für eine intermittierende Abbildung des Lichtstrahles vorhanden ist.

4. Anzeigevorrichtung nach einem der Ansprüche 1 bis 3, **dadurch gekennzeichnet, dass** die Ablenkmittel (7, 19) eine Drehvorrichtung (8) für eine rotierende Führung des Lichtstrahls umfassen.

5. Anzeigevorrichtung nach einem der Ansprüche 1 bis 4, **dadurch gekennzeichnet, dass** die Ablenkmittel (7, 19) eine Kippvorrichtung mit einer Kippachse für die Führung des Lichtstrahls (4) aufweisen.

6. Anzeigevorrichtung nach einem der Ansprüche 1 bis 5, **dadurch gekennzeichnet, dass** eine Lichtquelle (5) für die Erzeugung des Lichtstrahles (4) beweglich angeordnet ist.

7. Anzeigevorrichtung nach einem der Ansprüche 1 bis 6, **dadurch gekennzeichnet, dass** eine Synchronisationseinheit (10) zur Führung des Lichtstrahles (4) vorhanden ist.

8. Anzeigevorrichtung nach Anspruch 7, **dadurch gekennzeichnet, dass** die Synchronisationseinheit (10) einen Sensor (9), vorzugsweise ein Fotosensor umfasst.

9. Anzeigevorrichtung nach einem der Ansprüche 1 bis 8, **dadurch gekennzeichnet, dass** Nachleuchtmittel für eine nachleuchtende Darstellung des Lichtstrahls vorhanden sind.

10. Anzeigevorrichtung nach einem der Ansprüche 1 bis 9, **dadurch gekennzeichnet, dass** die Sichtbarmachungsmittel für die Wiedergabe des Lichtstrahllichtes für verschiedene Anzeigenbereiche in verschiedenen Farbgebungen ausgestaltet sind.

11. Anzeigevorrichtung nach einem der Ansprüche 1 bis 10, **dadurch gekennzeichnet, dass** die Sichtbarmachungsmittel segmentiert sind.

12. Anzeigevorrichtung nach einem der Ansprüche 1 bis 11, **dadurch gekennzeichnet, dass** die Ablenk- und Steuerungsmittel (7, 19) so ausgebildet sind, dass auf der Anzeigefläche (2) ein oder mehrere punktförmige und/oder ein oder mehrere band- oder strichförmige, beleuchtete Markierungen auf der Anzeigefläche gegebenenfalls gleichzeitig darstellbar sind.

13. Anzeigevorrichtung nach einem der Ansprüche 1 bis 12, **dadurch gekennzeichnet, dass** eine Korrektureinheit für die Behebung einer Nichtlinearität in der Auslenkung des Lichtstrahls vorhanden ist.

## Claims

1. Display apparatus (1) for displaying information, in particular for a vehicle, having a mechanical indicator (15) and a display surface (2) which is capable of being illuminated with a light beam (4) for representing the information, wherein movable deflection means (7, 19) are present with which the path of the light beam (4) can be changed, and wherein the deflection means (7, 19) are configured such that they move the light beam (4) multiple times over a section of the display surface (2) in order to represent current information on the section, **characterized in that** the deflection means (7, 19) are arranged in an eccentric position with respect to the axis of the mechanical indicator (15) and/or to the axis of a scale of the mechanical indicator (15).

2. Display apparatus according to Claim 1, **characterized in that** visualization means (21, 22) are provided in the region of the display surface (2) for visualizing the information, and **in that** the speed of the movement of the deflection means in cooperation with the visualization means (21, 22) is such that a viewer does not notice that the information on the section of the display surface is composed of a moving light beam.

3. Display apparatus according to either of Claims 1 and 2, **characterized in that** a control means for intermittent imaging of the light beam is present.

4. Display apparatus according to one of Claims 1 to 3, **characterized in that** the deflection means (7, 19) comprise a rotation apparatus (8) for rotating guidance of the light beam.

5. Display apparatus according to one of Claims 1 to 4, **characterized in that** the deflection means (7, 19) have a tilting apparatus with a tilt axis for guiding the light beam (4).

6. Display apparatus according to one of Claims 1 to 5, **characterized in that** a light source (5) for generating the light beam (4) is movably arranged.

7. Display apparatus according to one of Claims 1 to 6, **characterized in that** a synchronization unit (10) for guiding the light beam (4) is present.

8. Display apparatus according to Claim 7, **characterized in that** the synchronization unit (10) comprises a sensor (9), preferably a photosensor.

9. Display apparatus according to one of Claims 1 to 8, **characterized in that** luminescent means for luminescent representation of the light beam are present.

10. Display apparatus according to one of Claims 1 to 9, **characterized in that** the visualization means are configured for reproducing the light beam light for different display regions in different colorations.

11. Display apparatus according to one of Claims 1 to 10, **characterized in that** the visualization means are segmented.

12. Display apparatus according to one of Claims 1 to 11, **characterized in that** the deflection and control means (7, 19) are configured such that one or more dot-shaped and/or one or more strip-shaped or line-shaped, illuminated markings on the display surface are possibly representable at the same time on the display surface (2).

13. Display apparatus according to one of Claims 1 to 12, **characterized in that** a correction unit for compensating a non-linearity in the deflection of the light beam is present.

## Revendications

1. Dispositif d'affichage (1) destiné à afficher des informations, notamment pour un véhicule, comportant une aiguille mécanique (15) et une surface d'affichage (2), qui peut être éclairée par un faisceau lumineux (4) pour représenter les informations, dans lequel il est prévu des moyens de déviation mobiles (7, 19) à l'aide desquels le chemin du faisceau lumineux (4) peut être modifié, et dans lequel les moyens de déviation (7, 19) sont conçus de manière à ce que, pour la représentation d'une information instantanée sur une section de la surface d'affichage (2), ils déplacent plusieurs fois le faisceau lumineux (4) sur ladite section, **caractérisé en ce que** les moyens de déviation (7, 19) sont disposés à une position excentrique par rapport à l'axe de l'aiguille mécanique (15) et/ou par rapport à l'axe d'une graduation de l'aiguille mécanique (15).

2. Dispositif d'affichage selon la revendication 1, **caractérisé en ce qu'**il est prévu des moyens de visualisation (21, 22) dans la région de la surface d'affichage (2) pour visualiser les informations et **en ce que** la vitesse du déplacement des moyens de déviation en association avec les moyens de visualisation (21, 22) est telle qu'un observateur ne perçoit pas que l'information est composée d'un faisceau lumineux se déplaçant sur la section de la surface d'affichage.

3. Dispositif d'affichage selon l'une quelconque des revendications 1 ou 2, **caractérisé en ce qu'**un moyen diffusant est présent pour la formation d'une image intermittente du faisceau lumineux.

4. Dispositif d'affichage selon l'une quelconque des revendications 1 à 3, **caractérisé en ce que** les moyens de déviation (7, 19) comprennent un dispositif de rotation (8) destiné à guider de manière rotative le faisceau lumineux.

5. Dispositif d'affichage selon l'une quelconque des revendications 1 à 4, **caractérisé en ce que** les moyens de déviation (7, 19) comportent un dispositif de basculement ayant un axe de basculement pour le guidage du faisceaux lumineux (4).

6. Dispositif d'affichage selon l'une quelconque des revendications 1 à 5, **caractérisé en ce qu'**une source lumineuse (5) est disposée de manière mobile pour générer le faisceau lumineux (4).

7. Dispositif d'affichage selon l'une quelconque des revendications 1 à 6, **caractérisé en ce qu'**il est prévu une unité de synchronisation (10) pour le guidage du faisceau lumineux (4).

8. Dispositif d'affichage selon la revendication 7, **caractérisé en ce que** l'unité de synchronisation (10) comprend un capteur (9), de préférence un photocapteur.

9. Dispositif d'affichage selon l'une quelconque des revendications 1 à 8, **caractérisé en ce qu'**il est prévu des moyens phosphorescents pour une représentation phosphorescente du faisceau lumineux.

10. Dispositif d'affichage selon l'une quelconque des revendications 1 à 9, **caractérisé en ce que** les moyens de visualisation sont conçus pour reproduire la lumière du faisceau destiné à des zones d'affichage différentes dans des couleurs différentes.

11. Dispositif d'affichage selon l'une quelconque des revendications 1 à 10, **caractérisé en ce que** les moyens de visualisation sont segmentés.

12. Dispositif d'affichage selon l'une quelconque des revendications 1 à 11, **caractérisé en ce que** les moyens de déviation et de commande (7, 19) sont conçus de manière à ce qu'un ou plusieurs symboles ponctuels et/ou un ou plusieurs symboles en forme de bande ou de rayures éclairés puissent être représentés, le cas échéant simultanément, sur la surface d'affichage (2).

13. Dispositif d'affichage selon l'une quelconque des revendications 1 à 12, **caractérisé en ce qu'**il est prévu une unité de correction destinée à compenser une non-linéarité de la déviation du faisceau lumineux.
